# EUROPÄISCHE PATENTSCHRIFT

(11) **EP 1 238 502 B1**
(45) Veröffentlichungstag und Bekanntmachung des Hinweises auf die Patenterteilung: **08.03.2006**
(21) Anmeldenummer: 00990544.9
(22) Anmeldetag: 13.12.2000
(51) Int. Cl.: H04L 27/22, H04L 5/06, H04J 1/02

(54) **EMPFANGSVORRICHTUNG FÜR WINKELMODULIERTE SIGNALE UNTER VERWENDUNG DIGITALER KANALSELEKTION**
RECEIVING DEVICE FOR ANGLE-MODULATED SIGNALS USING A DIGITAL CHANNEL SELECTION
RECEPTEUR POUR SIGNAUX A MODULATION ANGULAIRE UTILISANT UNE SELECTION NUMERIQUE DU CANAL

(30) Priorität: 15.12.1999 DE 19960559
(43) Veröffentlichungstag der Anmeldung: 11.09.2002
(73) Patentinhaber: Infineon Technologies AG, 81669 München (DE)
(72) Erfinder: NEUBAUER, André, 47807 Krefeld (DE); BRÜCKMANN, Dieter, 40670 Meerbusch (DE)
(74) Vertreter: Lange, Thomas
(86) Internationale Anmeldenummer: PCT/DE2000/004494
(87) Internationale Veröffentlichungsnummer: WO 2001/045338

(56) Entgegenhaltungen:
- EP-A- 0 123 278
- EP-A- 0 486 095
- EP-A- 0 632 577
- EP-A- 0 795 984
- EP-A- 0 858 157
- EP-A- 0 858 179
- US-A- 5 247 515

## Beschreibung

Die vorliegende Erfindung betrifft eine Empfangsvorrichtung für winkelmodulierte Signale, insbesondere eine derartige Empfangsvorrichtung, bei der auch eine Selektion eines gewünschten Übertragungskanals durchgeführt wird.

In schnurlosen digitalen Kommunikationssystemen, wie beispielsweise DECT-, WDCT-, Bluetooth-, SWAP- oder WLAN-Funksystemen, werden zum drahtlosen Empfang der gesendeten hochfrequenten Signale geeignete Empfänger benötigt, welche zur Verarbeitung der in dem jeweiligen Kommunikationssystem verwendeten digitalen Modulationsart geeignet sind, wobei die vorliegende Erfindung insbesondere den Bereich der Frequenzmodulation betrifft.

Neben einer hohen Empfindlichkeit werden diesbezüglich ein hoher Integrationsgrad, geringe Kosten, eine niedrige Stromaufnahme sowie Flexibilität hinsichtlich der Anwendbarkeit in unterschiedlichen digitalen Kommunikationssystemen gewünscht.

In schnurlosen digitalen Kommunikationssystemen werden derzeit häufig Superheterodyn-Empfänger zum Empfangen und Demodulieren von winkelmodulierten Signalen verwendet. Zur Erzielung einer höheren Systemintegration und somit niedrigeren Systemkosten kommen vermehrt (beispielsweise in DECT-Mobilfunksystemen) auch sogenannte Low-IF (Intermediate Frequency)- oder Zero-IF(Homodyn)-Empfänger zum Einsatz, welche keine externen Filter zur Unterdrückung von Spiegelfrequenzen benötigen. Low-IF-Empfänger verwenden eine relativ niedrige Zwischenfrequenz, die bei Eingangssignalfrequenzen von ca. 2 GHz beispielsweise ca. 1 MHz betragen kann, während die Zwischenfrequenz bei Zero-IF-Empfängern 0 MHz beträgt. In diesen Empfängern kommen zur Demodulation derzeit auf dem sogenannten Limiter-Diskriminator-Prinzip basierende analoge FM-Demodulatoren ("Frequency Modulation") zum Einsatz, wobei zunächst das Basisbandsignal reproduziert und anschließend anhand des Basisbandsignals die übertragenen Symbole detektiert werden. Die Kanalselektion, d.h. die Auswahl des jeweils gewünschten Übertragungskanals des Empfangssignals, erfolgt vor der FM-Demodulation mit Hilfe analoger Filter, welche die unerwünschten Frequenzanteile bzw. Übertragungskanäle ausfiltern. Durch die in diesen Empfängern verwendete analoge Schaltungstechnik sind diese Empfänger jedoch gegenüber den mit der analogen Schaltungstechnik verbundenen Nachteilen, wie beispielsweise Drift, Alterung, Temperaturabhänggkeit etc., anfällig.

Aus den Druckschriften EP 0 858 157 A2 und US 5,247,515 A sind Empfangsvorrichtungen bekannt, bei denen in dem Empfangspfad hintereinander jeweils eine Analog/Digital-Wandlereinrichtung, eine digitale Frequenzumsetzeinrichtung, eine digitale Kanalselektionseinrichtung sowie eine digitale Demodulationseinrichtung angeordnet sind.

Der vorliegenden Erfindung liegt die Aufgabe zugrunde, eine Empfangsvorrichtung für winkelmodulierte Signale vorzuschlagen, bei der eine effektive Kanalselektion und Demodulation eines winkelmodulierten Empfangssignals durchgeführt werden kann und insbesondere die zuvor beschriebenen Probleme nicht auftreten.

Diese Aufgabe wird erfindungsgemäß durch eine Empfangsvorrichtung mit den Merkmalen des Anspruches 1 gelöst. Die Unteransprüche definieren vorteilhafte und bevorzugte Ausführungsformen der vorliegenden Erfindung.

Erfindungsgemäß wird eine digitale Kanalselektion durchgeführt. Zu diesem Zweck wird ein winkelmoduliertes Empfangssignal zunächst einer A/D-Wandlung unterzogen und ins Basisband transformiert. Anschließend erfolgt die digitale Kanalselektion sowie abschließend eine digitale Demodulation und Detektion des winkelmodulierten, beispielsweise (G)FSK-modulierten ("Gaussian Frequency Shift Keying"), Signals.

Für die digitale Kanalselektion wird erfindungsgemäß eine Serienanordnung aus mehreren abwechselnd angeordneten digitalen Filtern und Unterabtastungsstufen verwendet. Diese mehrstufige Architektur ist prinzipiell für die digitale schnurlose DECT-, WDCT-, Bluetooth-, SWAP-, WLAN-Kommunikationssysteme aufgrund deren auf die jeweiligen Symbolraten bezogenen ähnlichen Kanalbandbreiten und der jeweils verwendeten GFSK-Modulation geeignet. In dieser mehrstufigen digitalen Kanalselektionsarchitektur kommen ein Kammfilter, ein bireziprokes Brücken-Wellendigitalfilter, ein weiteres Brücken-Wellendigitalfilter sowie abschließend vorzugsweise ein Entzerrer zum Einsatz. Der Vorteil dieser Architektur liegt darin, daß die aufgrund der vorzugsweise für die A/D-Wandlung verwendeten Sigma-Delta-Wandler erforderliche Unterabtastung oder Dezimation gleichzeitig mit der Kanalselektion vorgenommen wird.

Vor der A/D-Wandlung kann eine Frequenzumsetzung auf eine niedrigere Zwischenfrequenz mit anschließender Tiefpaßfilterung erfolgen, wobei durch die Tiefpaßfilterung bereits eine grobe Kanalselektion durchgeführt wird.

Als A/D-Wandler werden vorzugsweise Sigma-Delta-Wandler verwendet, welche mit einer bestimmten Überabtastrate arbeiten. Für die Frequenzumsetzung ins Basisband kann ein digitaler komplexer Multiplizierer verwendet werden, der durch eine gespeicherte Tabelle ("Look-Up Table") implementiert ist oder den sogenannten CORDIC-Algorithmus anwendet.

Als digitaler Demodulator und Detektor wird vorzugsweise ein differentieller Demodulator mit einem anschließenden Vorzeichenvergleicher verwendet.

Die erfindungsgemäße Empfangsvorrichtung ist im wesentlichen digital aufgebaut und besitzt somit die allgemein bekannten Vorteile der digitalen Schaltungstechnik, wie insbesondere kein Drift, keine Alterung, keine Temperaturabhängigkeit und exakte Reproduzierbarkeit. Des weiteren kann die digitale Empfangsvorrichtung programmierbar ausgestaltet werden, d.h. die Charakteristik der Kanalselektionsfilter kann durch eine geeignete Einstellung der Filterkoeffizienten an die bei einem vorgegebenen schnurlosen digitalen Kommunikationssystem vorliegende Signalbandbreite angepaßt werden.

Die Erfindung wird nachfolgend näher anhand bevorzugter Ausführungsbeispiele unter Bezugnahme auf die beigefügte Zeichnung erläutert.
Fig. 1 zeigt ein vereinfachtes Blockschaltbild eines erfindungsgemäßen Empfängers,
Fig. 2 zeigt eine mögliche Realisierung für in Fig. 1 gezeigte Dezimations- und Kanalselektionseinheiten, und
Fig. 3 zeigt eine mögliche Realisierung für einen in Fig. 1 gezeigten digitalen Demodulator.

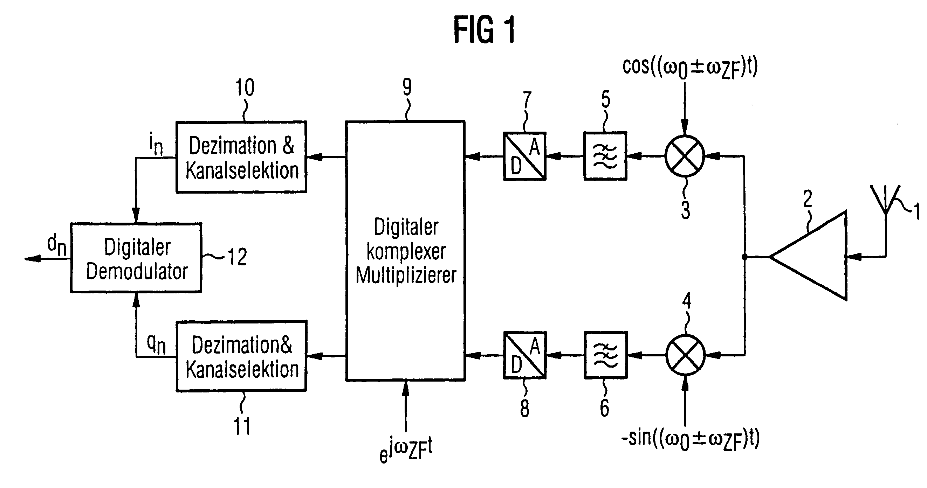

In Fig. 1 ist die prinzipielle Architektur eines digitalen Empfängers für digitale Kommunikationssysteme, insbesondere schnurlose digitale Kommunikationssysteme, gemäß einem bevorzugten Ausführungsbeispiel der vorliegenden Erfindung dargestellt.

Über eine Empfangsantenne 1 wird ein winkelmoduliertes Signal, insbesondere ein FSK-moduliertes Signal, empfangen. Dabei kann es sich beispielsweise um ein DECT-, WDCT-, Bluetooth-, SWAP- oder WLAN-Signal handeln, wobei bei diesen digitalen Kommunikationssystemen als digitale Modulationsart jeweils die sogenannte GFSK-Modulation ("Gaussian Frequency Shift Keying") angewendet wird. Die GFSK-Modulation stellt einen Spezialfall der allgemeinen Frequenzumtastung (FSK, "Frequency Shift Keying") mit geeigneter Impulsformung im Basisband durch einen Gauß-Tiefpaß dar. Bei den genannten Kommunikationssystemen wird zudem jeweils dasselbe BT-Verhältnis mit B^{.}T = 0,5 verwendet, wobei B die 3dB-Grenzfrequenz des Gauß-Tiefpasses und T die Bitdauer bezeichnet.

Mit Hilfe eines LNA-Verstärkers 2 ("Low Noise Amplifier") erfolgt eine rauscharme Verstärkung des Empfangssignals, ehe das Empfangssignal auf zwei Signalpfade aufgeteilt wird, wobei es sich bei dem oberen Signalpfad um einen Signalpfad für die sogenannte In-Phase- oder I-Komponente und bei dem unteren Signalpfad um einen Signalpfad für die sogenannte Quadratur- oder Q-Komponente des Empfangssignals handelt.

Über Frequenzmischer 3 bzw. 4 erfolgt eine Frequenzumsetzung auf eine niedrigere Zwischenfrequenz ω_{ZF}, die insbesondere der Symbolrate 1/T_{S} oder dem halben Kanalabstand Δf/2 entsprechen kann (in DECT-Systemen gilt beispielsweise 1/T_{S} = 1,152MHz und Δf/2 = 864kHz). Zur Unterdrückung von Spiegelfrequenzen geschieht diese Frequenzmumsetzung vorzugsweise unter Verwendung der Quadratursignale cos((ω₀±ω_{ZF})t+ϕ₀) bzw. -sin((ω₀±ω_{ZF})t+ϕ₀), wobei ω₀ die Trägerfrequenz und ϕ₀ die Nullphase bezeichnet.

Die somit bei der Zwischenfrequenz ω_{ZF} liegende I-Komponente bzw. Q-Komponente des Empfangssignals wird einem Antialiasing-Tiefpaßfilter 5 bzw. 6 zugeführt, wobei durch diese Tiefpaßfilterung bereits eine grobe Kanalselektion erfolgt.

Anschließend werden die analogen Signale mit Hilfe von A/D-Wandlern 7 bzw. 8 digitalisiert. Als A/D-Wandler 7 und 8 können insbesondere Sigma-Delta-Wandler der Ordnung L verwendet werden, die mit einer bestimmten Überabtastrate R arbeiten.

Nach der Digitalisierung erfolgt die Frequenzumsetzung der I- und Q-Komponentensignale des Empfangssignals in das Basisband (f = 0). Die I-Komponente bzw. die Q-Komponente können als Realteil bzw. Imaginärteil der komplexen Einhüllenden I+jQ des Empfangssignals angesehen werden, so daß die Frequenzumsetzung ins Basisband durch Verwendung eines digitalen komplexen Multiplizierers 9 erfolgt, der das durch die I-Komponente und Q-Komponente gebildete komplexe Eingangssignal mit *e*^{*Jω*_{*ZF*}t} = cos(*ω*_{*ZF*}*t*) + *j* sin(*ω*_{*ZF*}*t*) multipliziert. Diese komplexe Multiplikation läßt sich insbesondere durch vier reelle Multiplikationen darstellen, wobei hierzu beispielsweise eine ROM-Tabelle verwendet werden kann, in der die einzelnen Multiplikationsergebnisse abgelegt sind. Ebenso ist zur Durchführung der komplexen Multiplikation die Anwendung des iterativen CORDIC-Algorithmus denkbar.

In jedem der beiden Signalpfade wird anschließend mit Hilfe von digitalen Kanalselektionseinheiten 10 und 11 eine digitale Kanalselektion durchgeführt. Da für die A/D-Wandler 7 und 8, wie beschrieben, vorzugsweise Sigma-Delta-Wandler mit Überabtastung eingesetzt werden, erfolgt in den Einheiten 10 und 11 zudem eine entsprechende Unterabtastung bzw. Dezimation sowie eine Filterung des gefärbten Quantisierungsrauschens.

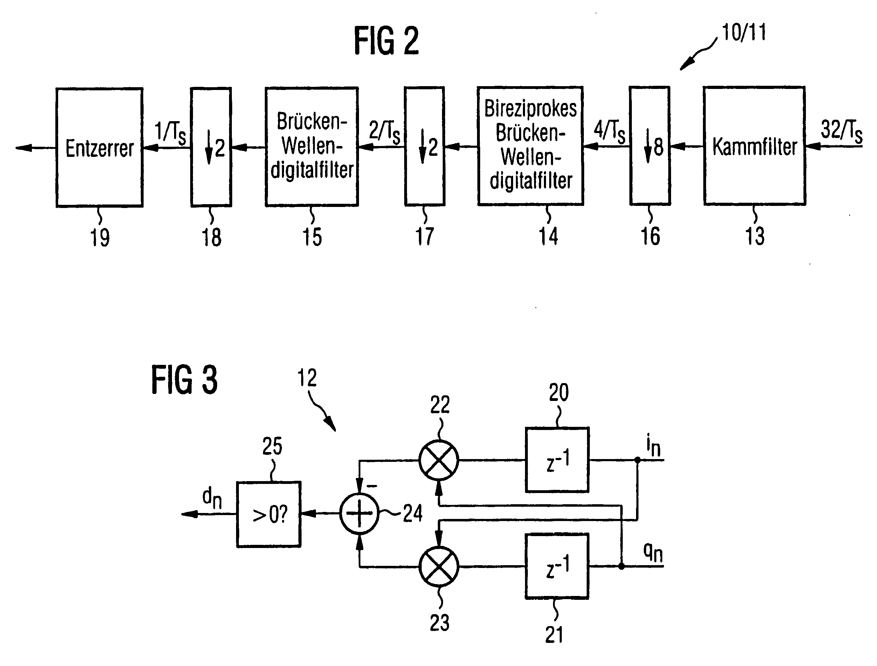

Eine mögliche mehrstufige Architektur für die Kanalselektionseinheiten 10 und 11 ist in Fig. 2 dargestellt, wobei davon ausgegangen wird, daß die Sigma-Delta-Wandler mit einer Überabtastrate R = 32 arbeiten. Die dargestellte mehrstufige Architektur ist prinzipiell für die schnurlosen digitalen Kommunikationssysteme DECT, WDCT, Bluetooth, SWAP und WLAN aufgrund der ähnlichen, auf die Symbolraten bezogenen Kanalbandbreiten sowie der jeweils verwendeten GFSK-Modulation mit B^{.}T = 0,5 geeignet.

Der Aufbau dieser mehrstufigen Kanalselektions- und Dezimations-Architektur ist derart, daß an die Ordnung L der Sigma-Delta-Wandler 7 und 8 angepaßt zunächst eine Filterung mit Hilfe eines Kammfilters (sinc^{L+1}-Filters) 13 der Ordnung L+1 erfolgt. Mit einer ersten Unterabtastungsstufe 16 wird die Abtastrate um den Faktor 8 auf 4/T_{S} reduziert. Nach einer weiteren Filterung mit einem bireziproken Brücken-Wellendigitalfilter ("Bireciprocal Lattice Wave Digital Filter") 14 wird durch eine weitere Unterabtastungsstufe 17 eine erneute Abtastratenreduktion um den Faktor 2 durchgeführt. Die abschließende Stufe der digitalen Kanalselektion umfaßt eine dritte Filterung mit Hilfe eines weiteren Brücken-Wellendigitalfilters 15 in Kombination mit einer dritten Abtastratenreduktion um den Faktor 2 auf 1/T_{S} durch eine dritte Unterabtastungsstufe 18. Abschließend erfolgt eine Entzerrung der durch die analoge Vorfilterung und digitale Kanalselektionsfilterung hervorgerufenenen Amplituden- und Gruppenlaufzeitverzerrungen durch einen Entzerrer ("Equalizer") 19 niedriger Ordnung.

Die auf diese Weise von den digitalen Kanalselektionseinheiten 10 und 11 gelieferten 1-Symbole iₙ bzw. Q-Symbole qₙ des selektierten Übertragungskanals werden zur Demodulation und Detektion einem mit der Symbolrate 1/T_{S} arbeitenden digitalen Demodulator 12 zugeführt.

Wie in Fig. 3 gezeigt ist, kann der digitale Demodulator 12 zur Demodulation und Detektion von (G)FSK-modulierten Signalen in Form eines differentiellen Demodulators mit gemäß Fig. 3 verlaufenden reellen Signalpfaden, welche Verzögerungsstufen 20 und 21 sowie Multiplizierer 22 und 23 und einen Addierer 24 aufweisen, ausgestaltet sein. An den differentiellen Demodulator schließt sich ein Vorzeichenvergleicher 25 an, der das Vorzeichen der von dem differentiellen Demodulator bzw. dessen Addierer 24 gelieferten Symbole auswertet und davon abhängig die Kommunikations- oder Nachrichtenbits dₙ bestimmt bzw. detektiert.

## Patentansprüche

1. Empfangsvorrichtung für winkelmodulierte Signale,
wobei eine Analog/Digital-Wandlereinrichtung (7,8) zum Umsetzen eines winkelmodulierten Empfangssignals in ein Digitalsignal vorgesehen ist,
wobei nach der Analog/Digital-Wandlereinrichtung (7,8) eine digitale Frequenzumsetzeinrichtung (9) zum Umsetzen des digitalisierten Empfangssignals in das Basisband vorgesehen ist,
wobei nach der digitalen Frequenzumsetzeinrichtung (9) eine digitale Kanalselektionseinrichtung (10,11) vorgesehen ist, um aus dem digitalisierten Empfangssignal den Empfangssignalanteil eines bestimmten Übertragungskanals auszuwählen, und
wobei nach der digitalen Kanalselektionseinrichtung (10,11) eine digitale Demodulationseinrichtung (12) zur Demodulation des ausgewählten Empfangssignalanteils vorgesehen ist,
**dadurch gekennzeichnet,**
**daß** die digitale Kanalselektionseinrichtung (10,11) eine Serienanordnung aus mehreren abwechselnd angeordneten digitalen Filtern (13-15) und Unterabtastungseinheiten (16-18) umfaßt,
wobei als digitale Filter (13-15) der digitalen Kanalselektionseinrichtung (10,11) ein Kammfilter (13), ein birezprokes Brücken-Wellendigitalfilter (14) und ein Brücken-Wellendigitalfilter (15) in der angegebenen Reihenfolge in den Empfangspfad geschaltet sind.

2. Empfangsvorrichtung nach Anspruch 1,
**dadurch gekennzeichnet,**
**daß** vor der Analog/Digital-Wandlereinrichtung (7,8) eine analoge Frequenzumsetzeinrichtung (3,4) zum Umsetzen des Empfangssignals in ein Zwischenfrequenzband (ω_{ZF}) vorgesehen ist, und
**daß** die nach der Analog/Digital-Wandlereinrichtung (7,8) vorgesehene digitale Frequenzumsetzeinrichtung (9) derart ausgestaltet ist, daß sie das digitalisierte Empfangssignal von dem Zwischenfrequenzband (ω_{ZF}) ins Basisband umsetzt.

3. Empfangsvorrichtung nach Anspruch 2,
**dadurch gekennzeichnet,**
**daß** die Zwischenfrequenz (ω_{ZF}) des Zwischenfrequenzbands niedriger als die Trägerfrequenz (ω₀) des Empfangssignals ist.

4. Empfangsvorrichtung nach Anspruch 2 oder 3,
**dadurch gekennzeichnet,**
**daß** die Zwischenfrequenz (ω_{ZF}) des Zwischenfrequenzbands der Symbolrate (1/T_{S}) des Empfangssignals entspricht.

5. Empfangsvorrichtung nach Anspruch 2 oder 3,
**dadurch gekennzeichnet,**
**daß** die Zwischenfrequenz (ω_{ZF}) des Zwischenfrequenzbands dem halben Kanalabstand des Empfangssignals entspricht.

6. Empfangsvorrichtung nach einem der Ansprüche 2-5,
**dadurch gekennzeichnet,**
**daß** zwischen der analogen Frequenzumsetzeinrichtung (3,4) und der Analog/Digital-Wandlereinrichtung (7,8) eine Tiefpaßfiltereinrichtung (5,6) zum Filtern des ins Zwischenfrequenzband (ω_{ZF}) umgesetzten Empfangssignals vorgesehen ist.

7. Empfangsvorrichtung nach einem der vorhergehenden Ansprüche,
**dadurch gekennzeichnet,**
**daß** die Empfangsvorrichtung einen ersten Signalverarbeitungspfad zum Verarbeiten einer In-Phase-Komponente des Empfangssignals und einen zweiten Signalverarbeitungspfad zum Verarbeiten einer Quadratur-Komponente des Empfangssignals aufweist, und
**daß** die digitale Demodulationseinrichtung (12) zur Demodulation die von dem ersten und zweiten Signalverarbeitungspfad ausgegebenen Symbole (iₙ, qₙ) empfängt.

8. Empfangsvorrichtung nach Anspruch 7,
**dadurch gekennzeichnet,**
**daß** die Analog/Digital-Wandlereinrichtung einen dem ersten Signalverarbeitungspfad zugeordneten ersten Analog/Digital-Wandler (7) und einen dem zweiten Signalverarbeitungspfad zugeordneten zweiten Analog/Digital-Wandler (8) umfaßt, und
**daß** der erste und zweite Analog/Digital-Wandler (7,8) jeweils in Form eines mit Überabtastung arbeitenden Sigma-Delta-Wandlers ausgestaltet ist.

9. Empfangsvorrichtung nach Anspruch 7 oder 8,
**dadurch gekennzeichnet,**
**daß** die digitale Kanalselektionseinrichtung eine dem ersten Signalverarbeitungspfad zugeordnete erste digitale Kanalselektionseinheit (10) und eine dem zweiten Signalverarbeitungspfad zugeordnete zweiten digitale Kanalselektionseinheit (11) umfaßt.

10. Empfangsvorrichtung nach Anspruch 9,
**dadurch gekennzeichnet,**
**daß** die erste und zweite Kanalselektionseinheit (10,11) jeweils eine mehrstufige Architektur aus mehreren abwechselnd angeordneten digitalen Filtern (13-15) und Unterabtastungseinheiten (16-18) umfassen, wobei
die erste und zweite Kanalselektionseinheit (10,11) jeweils eine Serienanordnung aus einem Kammfilter (13), einer ersten Unterabtastungseinheit (16), einem bireziproken Brücken-Wellendigitalfilter (14), einer zweiten Unterabtastungseinheit (17), einem Brücken-Wellendigitalfilter (15) und einer dritten Unterabtastungseinheit (18) umfassen.

11. Empfangsvorrichtung nach Anspruch 8 und Anspruch 10,
**dadurch gekennzeichnet,**
**daß** das Kammfilter (13) der ersten und zweiten digitalen Kanalselektionseinheit (10,11) eine um den Wert 1 höhere Ordnung als die in Form von Sigma-Delta-Wandlern ausgestalteten ersten und zweiten Analog/Digital-Wandler (7,8) besitzt.

12. Empfangsvorrichtung nach Anspruch 8 und Anspruch 10,
**dadurch gekennzeichnet,**
**daß** die in Form von Sigma-Delta-Wandlern ausgestalteten ersten und zweiten Analog/Digital-Wandler (7,8) mit 32-facher Überabtastung arbeiten, und
**daß** die erste Unterabtastungseinheiten (16) der ersten und zweiten Kanalselektionseinheit (10,11) mit 8-facher Unterabtastung und die zweiten und dritten Unterabtastungseinheiten (17,18) jeweils mit 2-facher Unterabtastung arbeiten.

13. Empfangsvorrichtung nach einem der Ansprüche 10-12,
**dadurch gekennzeichnet,**
**daß** die erste Kanalselektionseinheit (10) und die zweite Kanalselektionseinheit (11) ausgangsseitig jeweils einen Entzerrer (19) aufweisen.

14. Empfangsvorrichtung nach einem der Ansprüche 10-13,
**dadurch gekennzeichnet,**
**daß** die digitalen Filter (13-15) der ersten und zweiten digitalen Kanalselektionseinheit (10,11) zur Einstellung ihrer Filterkoeffizienten programmierbar ausgestaltet sind.

15. Empfangsvorrichtung nach einem der Ansprüche 7-14,
**dadurch gekennzeichnet,**
**daß** die digitale Frequenzumsetzeinrichtung (9) in Form eines digitalen komplexen Multiplizierers ausgestaltet ist.

16. Empfangsvorrichtung nach Anspruch 15,
**dadurch gekennzeichnet,**
**daß** der digitale komplexe Multiplizierer (9) die zur Frequenzumsetzung ins Basisband erforderliche komplexe Multiplikation durch Zugriff auf eine gespeicherte Tabelle durchführt.

17. Empfangsvorrichtung nach Anspruch 15,
**dadurch gekennzeichnet,**
**daß** der digitale komplexe Multiplizierer (9) die zur Frequenzumsetzung ins Basisband erforderliche komplexe Multiplikation durch Anwendung des CORDIC-Algorithmus durchführt.

18. Empfangsvorrichtung nach einem der Ansprüche 7-17 und Anspruch 6,
**dadurch gekennzeichnet,**
**daß** die analoge Frequenzumsetzeinrichtung einen dem ersten Signalverarbeitungspfad zugeordneten ersten Frequenzmischer (3) und einen dem zweiten Signalverarbeitungspfad zugeordneten zweiten Frequenzmischer (4) umfaßt, und
**daß** die Tiefpaßfiltereinrichtung ein dem ersten Signalverarbeitungspfad zugeordnetes erstes Tiefpaßfilter (5) und ein dem zweiten Signalverarbeitungspfad zugeordnetes zweites Tiefpaßfilter (6) umfaßt.

19. Empfangsvorrichtung nach einem der Ansprüche 7-18,
**dadurch gekennzeichnet,**
**daß** die digitale Demodulationseinrichtung (12) in Form eines differentiellen Demodulators (20-24) mit nachgeschaltetem Vorzeichenvergleicher (25) ausgestaltet ist, wobei der Vorzeichenvergleicher (25) durch Auswertung des Vorzeichens der von dem differentiellen Demodulator (20-24) ausgegebenen Symbole den Wert der dem ausgewählten Empfangssignalanteil entsprechenden Bits (dₙ) bestimmt.

20. Verwendung einer Empfangsvorrichtung nach einem der vorhergehenden Ansprüche in einem digitalen schnurlosen Kommunikationssystem.

21. Verwendung nach Anspruch 20,
**dadurch gekennzeichnet,**
**daß** die in dem digitalen schnurlosen Kommunikationssystem zu übertragenden Signale GFSK-moduliert werden.

## Claims

1. Receiving device for angle-modulated signals, whereby an analogue/digital converter device (7, 8) is provided for conversion of an angle-modulated receive signal into a digital signal,
whereby a digital frequency conversion device (9) is provided downstream of the analogue/digital converter device (7, 8) for conversion of the digitized receive signal into the baseband, whereby a digital channel selection device (10, 11) is provided downstream of the digital frequency conversion device (9) in order to select the receive signal component of a specific transmission channel from the digitized receive signal, and
whereby a digital demodulation device (12) is provided downstream of the digital channel selection device (10, 11) for demodulation of the selected receive signal component,
**characterized in that**
the digital channel selection device (10, 11) comprises a series arrangement comprising a plurality of alternately arranged digital filters (13-15) and undersampling units (16-18), whereby as the digital filters (13-15) of the digital channel selection device (10, 11) a comb filter (13), a bireciprocal lattice wave digital filter (14) and a lattice wave digital filter (15) are connected in the stated order in the reception path.

2. Receiving device according to Claim 1,
**characterized in that**
an analogue frequency conversion device (3, 4) is provided upstream of the analogue/digital converter device (7, 8) to convert the receive signal into an intermediate frequency band (ω_{ZF}), and that
the digital frequency conversion device (9) provided downstream of the analogue/digital converter device (7, 8) is designed in such a way that it converts the digitized receive signal from the intermediate frequency band (ω_{ZF}) into the baseband.

3. Receiving device according to Claim 2,
**characterized in that**
the intermediate frequency (ω_{ZF}) of the intermediate frequency band is lower than the carrier frequency (ω₀) of the receive signal.

4. Receiving device according to Claim 2 or 3,
**characterized in that**
the intermediate frequency (ω_{ZF}) of the intermediate frequency band corresponds to the symbol rate (1/T_{S}) of the receive signal.

5. Receiving device according to Claim 2 or 3,
**characterized in that**
the intermediate frequency (ω_{ZF}) of the intermediate frequency band corresponds to the half channel spacing of the receive signal.

6. Receiving device according to one of Claims 2-5,
**characterized in that**
a low-pass filter device (5, 6) is provided between the analogue frequency conversion device (3, 4) and the analogue/digital converter device (7, 8) to filter the receive signal which is converted into the intermediate frequency band (ω_{ZF}).

7. Receiving device according to one of the preceding claims,
**characterized in that**
the receiving device has a first signal processing path for processing an in-phase component of the receive signal, and a second signal processing path for processing a quadrature component of the receive signal, and that
the digital demodulation device (12) receives the symbols (iₙ, qₙ) output by the first and second signal processing paths for demodulation.

8. Receiving device according to Claim 7,
**characterized in that**
the analogue/digital converter device comprises a first analogue/digital converter (7) assigned to the first signal processing path, and a second analogue/digital converter (8) assigned to the second signal processing path, and that
the first and second analogue/digital converters (7, 8) are in each case designed in the form of a sigma-delta converter operating with oversampling.

9. Receiving device according to Claim 7 or 8,
**characterized in that**
the digital channel selection device.comprises a first digital channel selection unit (10) assigned to the first signal processing path, and a second digital channel selection unit (11) assigned to the second signal processing path.

10. Receiving device according to Claim 9,
**characterized in that**
the first and second channel selection units (10, 11) in each case comprise a multi-stage architecture comprising a plurality of alternately arranged digital filters (13-15) and undersampling units (16-18), whereby the first and second channel selection units (10, 11) in each case comprise a series arrangement comprising a comb filter (13), a first undersampling unit (16), a bireciprocal lattice wave digital filter (14), a second undersampling unit (17), a bireciprocal lattice wave digital filter (15) and a third undersampling unit (18).

11. Receiving device according to Claim 8 and Claim 10,
**characterized in that**
the comb filter (13) of the first and second digital channel selection units (10, 11) is of an order which is higher by the value 1 than the first and second analogue/digital
converters (7, 8) which are designed in the form of sigma-delta converters.

12. Receiving device according to Claim 8 and Claim 10,
**characterized in that**
the first and second analogue/digital converters (7, 8) designed in the form of sigma-delta converters operate with 32-fold oversampling, and that
the first undersampling units (16) of the first and second channel selection units (10, 11) operate with 8-fold undersampling, and the second and third undersampling units (17, 18) in each case operate with 2-fold undersampling.

13. Receiving device according to one of Claims 10-12,
**characterized in that**
the first channel selection unit (10) and second channel selection unit (11) in each case have an equalizer (19) on the output side.

14. Receiving device according to one of Claims 10-13,
**characterized in that**
the digital filters (13-15) of the first and second digital channel selection units (10, 11) are designed as programmable in order to set their filter coefficients.

15. Receiving device according to one of Claims 7-14,
**characterized in that**
the digital frequency conversion device (9) is designed in the form of a digital complex multiplier.

16. Receiving device according to Claim 15,
**characterized in that**
the digital complex multiplier (9) performs the complex multiplication required for the frequency conversion into the baseband by accessing a stored table.

17. Receiving device according to Claim 15,
**characterized in that**
the digital complex multiplier (9) performs the complex multiplication required for the frequency conversion into the baseband by applying the CORDIC algorithm.

18. Receiving device according to one of Claims 7-17 and Claim 6,
**characterized in that**
the analogue frequency conversion device comprises a first frequency mixer (3) assigned to the first signal processing path, and a second frequency mixer (4) assigned to the second signal processing path, and that
the low-pass filter device comprises a first low-pass filter (5) assigned to the first signal processing path, and a second low-pass filter (6) assigned to the second signal processing path.

19. Receiving device according to one of Claims 7-18,
**characterized in that**
the digital demodulation device (12) is designed in the form of a differential demodulator (20-24) with a downstream sign comparator (25), whereby the sign comparator (25) defines the value of the bits (dₙ) corresponding to the selected receive signal component by evaluating the sign of the symbols output by the differential demodulator (20-24).

20. Use of a receiving device according to one of the preceding claims in a digital cordless communications system.

21. Use according to Claim 20,
**characterized in that**
the signals which are to be transmitted in the digital cordless communications system are GFSK-modulated.

## Revendications

1. Dispositif de réception de signaux modulés angulairement, dans lequel il est prévu
un dispositif de conversion analogique/numérique (7, 8) pour la conversion d'un signal de réception modulé angulairement en un signal numérique,
après le dispositif de conversion analogique/numérique (7, 8) un dispositif numérique de conversion de fréquences (9) destiné à la conversion du signal de réception numérisé en la bande de base,
après le dispositif numérique de conversion de fréquences (9), un dispositif numérique de sélection de canaux (10, 11) pour sélectionner à partir du signal de réception numérisé la partie de signal de réception d'un canal de transmission déterminé et
après le dispositif numérique de sélection de canaux (10, 11), un dispositif numérique de démodulation (12) pour la démodulation de la partie de signal de réception sélectionnée,
**caractérisé en ce que**
le dispositif numérique de sélection de canaux (10, 11) comporte un agencement en série de plusieurs filtres numériques (13 à 15) et d'unités de sous-échantillonnage (16 à 18), disposés alternativement,
les filtres numériques (13 à 15) du dispositif numérique de sélection de canaux (10, 11) étant un filtre en peigne (13), un filtre numérique de mode en pont biréciproque (14) et un filtre numérique de mode en pont (15) qui sont montés dans cet ordre dans la voie de réception.

2. Dispositif de réception selon la revendication 1,
**caractérisé en ce que**
un dispositif analogique de conversion de fréquences (3, 4) destiné à convertir le signal de réception en une bande de fréquence intermédiaire (ω_{ZP}) est prévu avant le dispositif de conversion analogique/numérique (7, 8), et
le dispositif numérique de conversion de fréquences prévu après le dispositif de conversion analogique/numérique (7, 8) est conformé de façon à convertir le signal de réception numérisé de la bande de fréquence intermédiaire (ω_{ZP}) en la bande de base.

3. Dispositif de réception selon la revendication 2, **caractérisé en ce que** la fréquence intermédiaire (ω_{ZP}) de la bande de fréquence intermédiaire est inférieure à la fréquence porteuse (ω₀) du signal de réception.

4. Dispositif de réception selon la revendication 2 ou 3, **caractérisé en ce que** la fréquence intermédiaire (ω_{ZP}) de la bande de fréquence intermédiaire correspond au taux de symbole (1/T_{S}) du signal de réception.

5. Dispositif de réception selon la revendication 2 ou 3, **caractérisé en ce que** la fréquence intermédiaire (ω_{ZP}) de la bande de fréquence intermédiaire correspond à la moitié de l'écart entre canaux du signal de réception.

6. Dispositif de réception selon l'une des revendication 2 à 5, **caractérisé en ce qu'**un dispositif de filtrage passe-bas (5, 6) destiné à filtrer le signal de réception converti en la bande de fréquence intermédiaire (ω_{ZP}) est prévu entre le dispositif analogique de conversion de fréquences (3, 4) et le dispositif de conversion analogique/numérique (7, 8).

7. Dispositif selon l'une des revendications précédentes, **caractérisé en ce que**
le dispositif de réception comporte une première voie de traitement de signal destinée à traiter une composante en phase du signal de réception et une deuxième voie de traitement de signal destinée à traiter une composante en quadrature du signal de réception, et
le dispositif numérique de démodulation (12) destiné à la démodulation reçoit les symboles (iₙ, qₙ) provenant des première et deuxième voies de traitement de signal.

8. Dispositif de réception selon la revendication 7, **caractérisé en ce que**
le dispositif de conversion analogique/numérique comporte un premier convertisseur analogique/numérique (7) associé à la première voie de traitement de signal et un deuxième convertisseur analogique/numérique (8) associé à la deuxième voie de traitement de signal, et
les premier et deuxième convertisseurs analogique/numérique (7, 8) sont chacun conformés en convertisseur Sigma-Delta fonctionnant avec un sur-échantillonnage.

9. Dispositif de réception selon la revendication 7 ou 8, **caractérisé en ce que** le dispositif numérique de sélection de canaux comporte une première unité numérique de sélection de canaux (10) associée à la première voie de traitement de signal et une deuxième unité numérique de sélection de canaux (11) associée à la deuxième voie de traitement de signal.

10. Dispositif de réception selon la revendication 9, **caractérisé en ce que** les première et deuxième unités de sélection de canaux (10, 11) ont chacune une architecture à plusieurs étages constituée de plusieurs filtres numériques (13 à 15) et d'unités de sous-échantillonnage (16 à 18), disposés alternativement,
les première et deuxième unités de sélection de canaux (10, 11) comportant chacune un agencement en série d'un filtre en peigne (13), d'une première unité de sous-échantillonnage (16), d'un filtre numérique de mode en pont biréciproque (14), d'une deuxième unité de sous-échantillonnage (17), d'un filtre numérique de mode en pont (15) et d'une troisième unité de sous-échantillonnage (18).

11. Dispositif de réception selon la revendication 8 ou la revendication 10, **caractérisé en ce que** le filtre en peigne (13) des première et deuxième unités numériques de sélection de canaux (10, 11) possède un ordre qui est supérieur de la valeur 1 à celui des premier et deuxième convertisseurs analogique/numérique (7, 8) conformés en convertisseur Sigma-Delta.

12. Dispositif de réception selon la revendication 8 et la revendication 10, **caractérisé en ce que**
les premier et deuxième convertisseurs analogique/numérique (7, 8), conformés en convertisseurs Sigma-Delta fonctionne avec sur-échantillonnage dans un rapport de 32, et
les premières unités de sous-échantillonnage (16) des première et deuxième unités de sélection de canaux (10, 11) fonctionnent avec un sous-échantillonnage dans un rapport de 8 et les deuxième et troisième unités de sous-échantillonnage (17, 18) fonctionne chacun avec un sous-échantillonnage dans un rapport de 2.

13. Dispositif de réception selon l'une des revendications 10 à 12, **caractérisé en ce que** la première unité de sélection de canaux (10) et la deuxième unité de sélection de canaux (11) comporte chacune en sortie un égaliseur (19).

14. Dispositif de réception selon l'une des revendications 10 à 13, **caractérisé en ce que** les filtres numériques (13 à 15) des première et deuxième unités numériques de sélection de canaux (10, 11) sont conformés pour être programmables afin de régler leur coefficient de filtrage.

15. Dispositif de réception selon l'une des revendications 7 à 14, **caractérisé en ce que** le dispositif numérique de conversion de fréquences (9) est conformé en multiplicateur complexe numérique.

16. Dispositif selon la revendication 15, **caractérisé en ce que** le multiplicateur complexe numérique (9) effectue la multiplication complexe nécessaire à la conversion de fréquences en la bande de base en accédant à une table en mémoire.

17. Dispositif de réception selon la revendication 15, **caractérisé en ce que** le multiplicateur complexe numérique (9) effectue la multiplication complexe nécessaire à la conversion de fréquences en la bande de base en utilisant l'algorithme CORDIC.

18. Dispositif de réception selon l'une des revendications 7 à 17 et la revendication 6, **caractérisé en ce que**
le dispositif analogique de conversion de fréquences comporte un premier mélangeur de fréquences (3) associé à la première voie de traitement de signal et un deuxième mélangeur de fréquences (4) associé à la deuxième voie de traitement de signal, et
le dispositif de filtrage passe-bas comporte un premier filtre passe-bas (5) associé à la première voie de traitement de signal et un deuxième filtre passe-bas (6) associé à la deuxième voie de traitement de signal.

19. Dispositif de réception selon l'une des revendications 7 à 18, **caractérisé en ce que** le dispositif numérique de démodulation (12) est conformé en démodulateur différentiel (20 à 24) en aval duquel est monté un comparateur de signes (25), le comparateur de signes (25) déterminant la valeur des bits (dₙ) correspondant à la partie de signal de réception sélectionnée en exploitant le signe des symboles délivrés par le démodulateur différentiel (20 à 24).

20. Utilisation d'un dispositif de réception selon l'une des revendications précédentes dans un système numérique de communication sans fil.

21. Utilisation selon la revendication 20, **caractérisé en ce que** les signaux à transmettre dans le système numérique de communication sans fil sont GFSK-modulés.
